# EUROPÄISCHE PATENTSCHRIFT

(11) **EP 4 031 623 B1**
(45) Veröffentlichungstag und Bekanntmachung des Hinweises auf die Patenterteilung: **18.10.2023**
(21) Anmeldenummer: 21811326.4
(22) Anmeldetag: 15.11.2021
(51) Int. Cl.: C08L 75/06, C08L 75/08, C08J 9/14, C08J 9/00, C08K 3/011, C08K 3/04, C08K 3/34, C08K 5/053, C08G 101/00

(54) **VERFAHREN ZUR HERSTELLUNG EINES ELASTOMER-WERKSTOFFS UNTER VERWENDUNG VON PECUS**
PROCESS FOR PRODUCING AN ELASTOMER MATERIAL USING PECUS
PROCESSUS DE PRODUCTION D'UN MATÉRIAU ÉLASTOMÈRE À L'AIDE DE PECUS

(30) Priorität: 20.11.2020 DE 102020130807; 25.01.2021 DE 102021101532
(43) Veröffentlichungstag der Anmeldung: 27.07.2022
(73) Patentinhaber: W. KÖPP GmbH & Co. KG, 52080 Aachen (DE)
(72) Erfinder: PEINE, Andreas, 52076 Aachen (DE); FRASCA, Daniele, 37073 Göttingen (DE); SCHULZE, Maria, 37073 Göttingen (DE)
(74) Vertreter: Kohlmann, Kai
(86) Internationale Anmeldenummer: PCT/EP2021/081660
(87) Internationale Veröffentlichungsnummer: WO 2022/106347

(56) Entgegenhaltungen:
- EP-A1- 3 067 376
- WO-A1-2014/072336
- WO-A1-2018/069350
- WO-A2-2014/060329

## Beschreibung

Die Erfindung betrifft ein Verfahren zur Herstellung eines Elastomer-Werkstoffs mit verbesserter Verarbeitungsfähigkeit unter Verwendung eines Polyurethans basierend auf der Umsetzung eines ungesättigten Polyethercarbonatpolyols (PEC) mit einem mehrfunktionellen Isocyanat als Rohstoff, wobei. das ungesättigte Polyethercarbonatpolyol auf der Umsetzung von CO₂ mit einem Alkylenoxid basiert.

Die Covestro AG, Leverkusen, Deutschland ist Hersteller von derartigen Polyurethanen als Rohpolymer (PECUs) basierend auf der Umsetzung eines ungesättigten Polyethercarbonatpolyols mit einem mehrfunktionellen Isocyanat, wobei das ungesättigte Polyethercarbonatpolyol (PEC) auf der Umsetzung von CO₂ mit einem Alkylenoxid basiert. Diese Reaktion ist ökologisch sehr vorteilhaft, weil sie die Umsetzung eines Treibhausgases wie CO₂ zu einem Polymer darstellt.

Polyurethane basierend auf der Umsetzung eines ungesättigten Polyethercarbonatpolyols mit einem mehrfunktionellen Isocyanat, wobei das ungesättigte Polyethercarbonatpolyol auf der Umsetzung von CO2 mit einem Alkylenoxid basiert werden zumeist in zwei reaktiven Schritten hergestellt. In einem ersten Verfahrensschritt, werden ungesättigte, auf einer Umsetzung von CO₂ mit einem Alkylenoxid basierende Polyethercarbonatpolyole (PEC) mit mehrfunktionelle Isocyanaten (z.B. HDI) zu einem Präpolymer umgesetzt. In einem zweiten, optionalen reaktiven Verfahrensschritt kann eine Kettenverlängerung der hochviskosen Präpolymäre mit Kettenverlängerern zu vernetzbaren Polyurethanelastomeren erfolgen.

Die WO 2018/069350 A1 offenbart die Herstellung von PECUs basierend auf ungesättigten Polyethercarbonatpolyolen, die funktionelle Mehrfachbindungen enthalten. Diese können sich in der Seitenkette des Polyethercarbonatpolyols oder in der Hauptkette des Polyethercarbonatpolyols befinden. Es wird dieses Polyol mit mehrfunktionellen Isocyanaten zum PECU umgesetzt. Dabei entsteht ein elastomeres Präpolymer, das durch die Mehrfachbindungen vernetzbar ist, eine hohe Elastizität und eine geringe Adhäsionsbruchenergie (geringe Klebektaft)aufweist .

Die WO 2018/069348 A1 offenbart die Herstellung von PECUs basierend auf ungesättigten Polyethercarbonatpolyolen, die funktionelle Mehrfachbindungen enthalten. Diese können sich in der Seitenkette des Polyethercarbonatpolyols oder in der Hauptkette des Polyethercarbonatpolyols befinden. Es wird dieses Polyol mit mehrfunktionellen Isocyanaten zum PECU umgesetzt, welches in einem weiteren Verfahrensschritt katalytisch oder peroxidisch vorvernetzt wird. Die Mehrfachbindungen bleiben bei diesem Schritt erhalten. Es entsteht ein elastomeres Präpolymer, das durch die Mehrfachbindungen vernetzbar ist.

Die WO 2014/060329 A2 offenbart ein zweistufiges Verfahren zur Herstellung eines Polyurethans basierend auf der Umsetzung eines Polyethercarbonatpolyols mit einem mehrfunktionellen Isocyanat basierend auf einem mittels CO₂ synthetisiertem Polyethercarbonatpolyols (PEC) und einem Diisocyanat. Dabei reagieren die beiden Komponenten in einem ersten Schritt zu einem Präpolymer. Dieses wird in einem zweiten Schritt mit Hilfe eines Kettenverlängerers zu einem Polyurethanelastomer umgesetzt. Als Kettenverlängerer wird mindestens ein bifunktioneller Alkohol eingesetzt (Diol). Der zweite Schritt wird als Gießharz in Platten ausreagiert, die mechanisch, beispielsweise durch Zerkleinern, in eine Form gebracht werden, die eine Weiterverarbeitung zulassen.Das eingesetzte Polyethercarbonatpolyol wurde in den Reaktionskessel gegeben und bei 100°C ca. 30min. entwässert. Das Polyol wurde auf die Einsatztemperatur von 119-122 °C erhitzt und anschließend das Isocyanat hinzugegeben. Nach erfolgter Zugabe des Isocyanates wurde unter Vakuum eine Auslauftemperatur von ca. 125-127°C erfasst. Nach Abschluss der Reaktion wurde das Prepolymere bei ca. 110°C mit Kettenverlängerer versetzt und in vorgewärmte Formen gegossen. Sobald die Gussmassen entformbar waren, wurden sie zur weiteren Alterung für ca. 16 h bei 110°C in einen Ofen gelegt. Bei Raumtemperatur wurden die Proben anschließend 4 Wochen sowie 2 weiteren Wochen Wasserlagerung gelagert.

Die WO 2014072336 A1 offenbart ein Verfahren zur Herstellung von Polyethercarbonatpolyolen, wobei (i) in einem ersten Schritt an einer oder mehreren H-funktionellen Startsubstanzen in Gegenwart mindestens eines DMC-Katalysators (a) Kohlendioxid und Propylenoxid oder (b) Kohlendioxid und eine Mischung aus Propylenoxid und mindestens einem weiteren Alkylenoxid in einem Gewichtsverhältnis von > 90 : 10 angelagert werden, (ii) in einem zweiten Schritt das aus Schritt (i) erhaltene Reaktionsgemisch (ii-1) zunächst mit einer Mischung enthaltend Propylenoxid (PO) und Ethylenoxid (EO) in einem Gewichtsverhältnis PO/EO von 90/10 bis 20/80 in Gegenwart mindestens eines DMC-Katalysators kettenverlängert wird, (ii-2) dann das resultierende Gemisch mit einer Mischung enthaltend Propylenoxid (PO) und Ethylenoxid (EO) in einem Gewichtsverhältnis PO/EO von 60/40 bis 2/98 in Gegenwart mindestens eines DMC-Katalysators kettenverlängert wird, und (iii) das aus Schritt (ii) resultierende Polyethercarbonatpolyol mit Ethylenoxid oder einer Mischung aus Propylenoxid (PO) und Ethylenoxid (EO) in einem Gewichtsverhältnis PO/EO von 5/95 bis 0,1/99,9 in Gegenwart mindestens eines DMC-Katalysators kettenverlängert wird, wobei in Schritt (ii-2) der Gewichtsanteil des EO in der Mischung enthaltend PO und EO höher ist als der Gewichtsanteil des EO in der Mischung enthaltend PO und EO in Schritt (ii-1), die Polyethercarbonatpolyole erhältlich nach diesem Verfahren, sowie die Verarbeitung der Polyethercarbonatpolyole zur Herstellung von Polyurethan-Weichschaumstoffen.

Die DE 10 2012 218 848 A1 offenbart ein zweistufiges Verfahren zur Herstellung eines thermoplastischen Polyurethans (TPU) basierend auf einem mittels CO₂ synthetisiertem Polyethercarbonatpolyols (PEC) und einem Diisocyanat. Dabei reagieren die beiden Komponenten in einem ersten Schritt zu einem Präpolymer. Dieses wird in einem zweiten Schritt mit Hilfe eines Kettenverlängerers zu einem Polyurethanelastomer umgesetzt. Als Kettenverlängerer wird mindestens ein bifunktionelles Molekül eingesetzt, welches reaktive Gruppen hat, die mit den Isocyanatgruppen des Präpolymers reagieren können. Der zweite Schritt wird als Gießharz in Platten ausreagiert, die mechanisch z.B. durch Zerkleinern in eine Form gebracht werden, die eine Weiterverarbeitung zulassen.

Die US 2008/021154 A1 offenbart die Herstellung eines aus CO₂ synthetisiertem Polyethercarbonatpolyols (PEC). Die Synthese erfolgt auf Basis eines Doppelmetallcyanid (DMC).

Die nachfolgenden Veröffentlichungen betreffen jeweils die Herstellung von Polyurethan-Schäumen, die durch Zugabe von Vernetzern vernetzt geschäumt werden:
Die WO 2012/ 130760 A1 offenbart eine einstufige Herstellung eines Polyurethanweichschaums basierend auf einem Polyetherpolyol und einem Diisocyanat. Als eine weitere Komponente wird ein mittels CO₂ synthetisiertes Polyethercarbonatpolyol(PEC) eingesetzt. Als Treibmittel werden Wasser und/oder physikalische Treibmittel eingesetzt.

Die WO 2019/122923 A1 offenbart die Herstellung eines Hartschaums des Typs Polyurethan, Polyisocyanurat und/oder einer Mischung aus beidem basierend auf der Reaktion eines Polyols mit einem Isocyanat. Als eine weitere Komponente wird ein mittels CO₂ synthetisiertes Polyethercarbonatpolyol eingesetzt. Die Reaktion des Hartschaums wird als einstufig beschrieben unter Zuhilfenahme von Katalysatoren, Netzmitteln, Wasser und/oder physikalischen Treibmitteln, Flammschutzmitteln, Farben, Weichmachern, Zellöffnern, Antistatika, Phasenvermittlern, Viskositätsmodifizierern, Vernetzern, Kettenverlängerern und/oder Härtern.

Die EP 3067376 A1 offenbart die Herstellung eines Polyurethanweichschaums basierend auf einem mittels CO₂ synthetisiertem Polyethercarbonatpolyols (PEC)und einem Diisocyanat. Die Reaktion wird als einstufig beschrieben unter Zuhilfenahme von Katalysatoren, Netzmitteln, Wasser und/oder physikalischen Treibmitteln, Vernetzern, Kettenverlängerern und/oder Härtern.

ACS omega, United States 31 May 2019, vol. 4, no. 5, 7944-7952 und JOURNAL OF POLYMERS AND THE ENVIRONMENT, 20200207 Springer New York LLC, US, vol. 28, no. 4, 1160-1168 offenbart die Herstellung von Polyurethanschäumen basierend auf einem mittels CO₂ synthetisiertem Polyethercarbonatpolyols (PEC) und einem Diisocyanat. Die Synthese der PEC erfolgt auf Basis eines Doppelmetallcyanid (DMC).

Verfahren zur Herstellung von Polyurethanen als Rohpolymere (PECUs), die auf der Umsetzung eines ungesättigten Polyethercarbonatpolyols (PEC) mit einem mehrfunktionellen Isocyanat basieren, wobei das ungesättigte Polyethercarbonatpolyol auf der Umsetzung von CO₂ mit einem Alkylenoxid basiert, leisten vor allem einen Beitrag zur Ressourcenschonung, denn das verwendete Kohlendioxid ersetzt einen Teil des Erdöls, auf dem Polyole üblicherweise vollständig beruhen - es werden damit deutlich weniger fossile Rohstoffe verwendet. Durch Rückführung von CO₂ in die Wertschöpfungskette hilft die Technologie außerdem, die Kreislaufwirtschaft in der Chemie- und Kunststoffindustrie auszubauen.

Die Verarbeitungsfähigkeit von Polyurethanen basierend auf der Umsetzung eines ungesättigten Polyethercarbonatpolyols mit einem mehrfunktionellen Isocyanat bei dem das ungesättigte Polyethercarbonatpolyol auf der Umsetzung von CO₂ mit einem Alkylenoxid basiert als Rohpolymer (PECUs) in verschiedenen Anwendungen wurde bereits in Machbarkeitsstudien untersucht, vgl. r+impuls - Verbundvorhaben: Production Dreams - Erarbeiten kontinuierlicher Verfahrensschritte zum Hochskalieren der Produktion von Polyethercarbonatpolyurethanen mit kovalent gebundenem Kohlenstoffdioxid, Förderkennzeichen: 033R150 A-D, Schlussbericht zu Nr. 8.2); eine wirtschaftliche Verarbeitung des Rohpolymers in geschäumten und ungeschäumten Anwendungen ist jedoch bisher nicht gelungen.

Ungeschäumte Anwendungen sind beispielsweise die Herstellung von Elastomerformteilen, Elastomermatten und Elastomerförderbändern im Wege des Spritzgießens, des Transfer Moulding oder des Extrudierens, z.B. der Profilextrusion

Bei den geschäumten Anwendungen ist zwischen kontinuierlich und diskontinuierlich hergestellten Produkten zu unterscheiden, z.B. im Wege der Schaumextrusion, des Formteilschäumens oder der Blockschaumherstellung. Kontinuierlich werden beispielsweise Bahnen und Profile hergestellt, wobei der Großteil dieser kontinuierlich hergestellten Produkte als Dämmstoffe in der Bauindustrie Verwendung findet. Zu den diskontinuierlich hergestellten Produkten zählen Zellelastomere für Anwendungen im Bereich technischer Lösungen und Moosgummiformteile, einschließlich Mossgummiprofile. Aus diesen Materialien werden technische Teile für unterschiedliche Bereiche hergestellt, z.B. im Bereich der Akustik sowie der Dichtungs-, der Medizin- und Verpackungstechnik.

Ausgehend von einem Polyurethan als Rohpolymer(PECUs), basierend auf der Umsetzung eines ungesättigten Polyethercarbonatpolyols (PEC) mit einem mehrfunktionellen Isocyanat bei dem das ungesättigte Polyethercarbonatpolyol auf der Umsetzung von CO₂ mit einem Alkylenoxid basiert (PECUs), liegt der Erfindung die Aufgabe zugrunde, ein Verfahren zur Herstellung eines Elastomer-Werkstoffs als Zwischenprodukt mit verbesserter Verarbeitungsfähigkeit, insbesondere in geschäumten und nicht geschäumten Anwendungen, vorzuschlagen.

In der ersten Stufe werden die PECUs unter Zugabe von Kettenverlängerern und weiteren im Anspruch 1 spezifizierten, temperaturgeführt zugegebenen Mischungsbestandteilen der Grundmischung zerstörungsfrei aufgeschmolzen. In der zweiten Stufe wird die aktivierte Fertigmischung (Masterbatch) für geschäumte und ungeschäumte Anwendungen unterhalb der Schmelztemperatur der PECUs unter Zugabe von Ketterverlängerern und weiteren im Anspruch 1 spezifizierten, temperaturgeführt zugegebenen Mischungsbestandteilen auf der Basis der Grundmischungsfelle hergestellt.

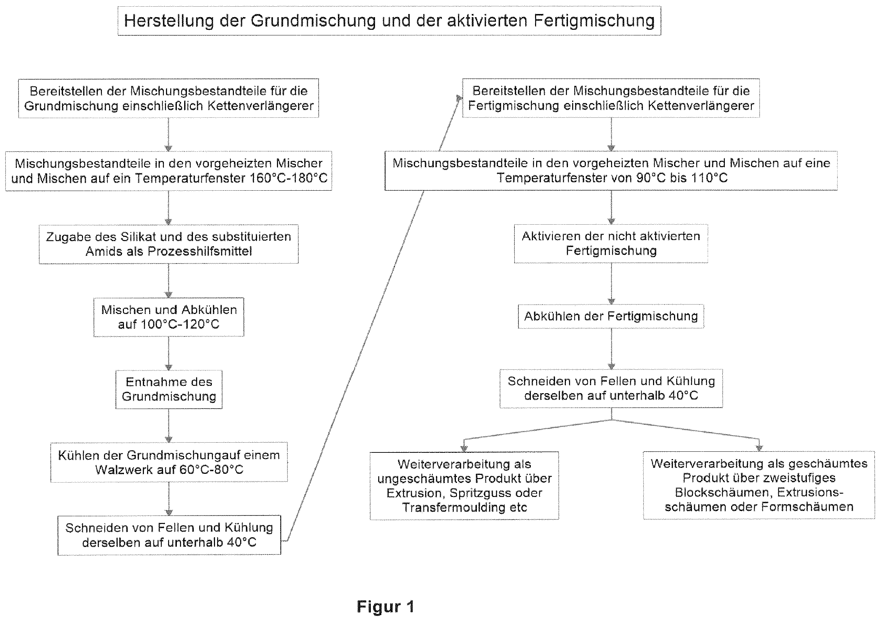

Im Einzelnen wird die Aufgabe durch ein Verfahren mit den Merkmalen des Anspruchs 1 gelöst, dessen Schritte schematisch anhand des in Figur 1 dargestellten Flussdiagramms veranschaulicht werden:
Um gleichförmige, reproduzierbare Mischungsbedingungen für die Herstellung des Elastomer-Werkstoffs in mehreren Chargen zu schaffen, wird der Innenmischer mit geschlossener Mischkammer auf eine Vorheiztemperatur in einem Temperaturfenster zwischen 50 - 100 ° C vorgeheizt. Das Vorheizen der Mischkammer erfolgt mittels einer Vorheizmischung, die zugleich die Mischkammer reinigen kann. Mittel eines Temperatursensors, beispielsweise eines Thermoelementes, wird die Temperatur der Vorheizmischung, die Vorheiztemperatur, während des Mischens der Vorheizmischung erfasst. Die Vorheizmischung zum Vorheizen der Mischkammer wird mindestens 5 Minuten gemischt. Nach dieser Mischdauer haben auch die die Mischkammer begrenzenden Wände die Vorheiztemperatur angenommen.

Die Mischleistung wird durch zwei Rotoren erbracht. Dabei werden ineinandergreifende und tangierende Rotorsysteme unterschieden. Vorzugsweise werden ineinandergreifende Rotorsysteme verwendet aufgrund einer optimalen Kombination der Einbringung von Scherkräften bei hoher Kühlleistung im Vergleich zu tangierenden Rotorsystemen.

In die auf die Vorheiztemperatur vorgeheizte Mischkammer werden verschiedene Mischungsbestandteile einer Grundmischung eingesetzt. Die Mischungsbestandteile umfassen Kautschuk sowie verschiedene Chemikalien. Im Einzelnen:
- PECUs 100 phr als Rohpolymer (Kautschuk) bestimmt die Grundeigenschaften des herzustellenden Elastomer-Werkstoffs.
- Ruß, vorzugsweise Printruß 20 - 60 phr erhöht die Mischungsfriktion und dient der Strukturfestigkeit sowie zugleich als Farbstoff.
- Polyglykol 1 - 10 phr als Verarbeitungshilfsmittel verhindert ein Verkleben der Mischungsbestandteile mit den Innenwänden des Mischers.
- Amidwachs 1 - 10 phr als Verarbeitungshilfsmittel reduziert die Klebrigkeit der Mischungsbestandteile.
- Ein Kettenverlängerer aus der Gruppe der Diamine, vorzugsweise ein Diamin mit zwei übereinstimmenden NH₂-Gruppen und einer Ringstruktur 0,5 - 5 phr fungiert mit den beiden gleichwertigen NH₂ Gruppen als verbindendes Glied zwischen zwei Molekülketten der PECUs. Der Kettenverlängerer trägt maßgeblich zur verbesserten Verarbeitbarkeit der PECUs und der Elastizität des hergestellten Werkstoffs bei.

Kettenverlängerer aus der Gruppe Diamine sind beispielsweise Isophorondiamin, Ethylendiamin, 1,2-Propylendiamin, 1,3- Propylendiamin, N-Methyl-propylen-1,3-diamin, N,N'-Dimethyl-ethylendiamin und aromatische Diamine, wie z.B. 2,4-Toluylendiamin und 2,6- Toluylendiamin, 3,5-Diethyl-2,4-toluylendiamin und 3,5-Diethyl-2,6-toluylendiamin und primäre mono-, di-, tri- oder tetraalkylsubstituierte 4,4'- Diaminodiphenylmethane.
Ein besonders bevorzugter Kettenverlängerer aus der Gruppe der Diamine mit zwei übereinstimmenden NH₂-Gruppen und einer Ringstruktur ist 4,4'-methylenebis (3-chlor-2,6-diethylaniline) .

Die vorgenannten Mischungsbestandteile der Grundmischung werden gemischt und erhitzt bis eine Temperatur oberhalb der Schmelztemperatur der PECUs erreicht wird. Die Schmelztemperatur liegt in einem Bereich zwischen 160° - 180° C, abhängig von der Beschaffenheit des Rohpolymers. Die Temperaturmessung der Mischungsbestandteile in der Mischkammer erfolgt mittels eines Temperatursensors, beispielsweise eines Thermoelementes. Hierbei handelt es sich vorzugsweise um denselben Temperatursensor, der auch die Temperatur der Vorheizmischung erfasst.

Sodann erfolgt ein Einsetzen von weiteren Mischungsbestandteilen der Grundmischung in die auf eine Temperatur oberhalb der Schmelztemperatur vorgeheizten Mischungsbestandteile, nämlich Silikat 1-10 phr als Füllstoff und substituierte Amide 0,5 - 5 phr als Verarbeitungshilfsmittel. Das in der Regel pulverförmige Silikat hat eine dispergierende Wirkung auf die flüssigen Komponenten der Mischung. Das eingemischte Silikat verbessert die mechanischen Eigenschaften des herzustellenden Elastomer-Werkstoffs. Die substituierten Amide erleichtern die Mischung oberhalb der Schmelztemperatur.

Nach dem Einsetzen der weiteren Bestandteile wird das Mischen der Grundmischung fortgesetzt und die Grundmischung in der Mischkammer zugleich gekühlt, bis eine Abkühltemperatur in einem Temperaturfenster zwischen 100 - 120 °C erreicht ist. Dem Wärmeeintrag in die Grundmischung beim Mischen wirkt die aktive Kühlung der Mischkammer entgegen. Die Messung der Temperatur der Grundmischung bis zum Erreichen der Abkühltemperatur erfolgt mittels eines Temperatursensors, beispielsweise eines Thermoelementes. Hierbei handelt es sich vorzugsweise um denselben Temperatursensor, der auch die Temperatur der Vorheizmischung erfasst.

Die auf die Abkühltemperatur abgekühlte Grundmischung wird entnommen, mit den Kühlwalzen eines Walzwerks gewalzt und dabei auf eine Temperatur von 60 - 80°C abgekühlt. Mittels eines Temperatursensors, beispielsweise eines Thermoelementes, wird die Temperatur von Proben der Grundmischung so oft wie erforderlich erfasst, bis die Abkühltemperatur in dem Bereich zwischen 60 - 80°C erreicht ist. Zur Probennahme werden die Kühlwalzen angehalten, um die Unfallgefahr zu reduzieren.

Nach dem Walzen werden die sich auf den Kühlwalzen bildenden Grundmischungsfelle abgezogen. Die Grundmischungsfelle werden als Platten abgenommen oder in Endlosstreifen geschnitten und anschließend auf eine Temperatur unterhalb von 40 °C, vorzugsweise Umgebungstemperatur, abgekühlt. Die Abkühlung kann durch Lagerung und/oder in einer Fellkühlanlage erfolgen. Die Temperatur kann mittels eines Temperatursensors, beispielsweise eines Thermoelementes, erfasst werden. Bei einer ausreichend langen Lagerung der Grundmischungsfelle kann ohne gesonderte Temperaturmessung von einer Abkühlung auf Umgebungstemperatur ausgegangen werden.

In der 2. Stufe des Verfahrens wird der Innenmischer zur Mischung der Grundmischung oder ein weiterer Innenmischer, der ausschließlich zum Mischen der Fertigmischung vorgesehen ist, auf eine Vorheiztemperatur in einem Temperaturfenster zwischen 50 - 100 ° C vorgeheizt, um reproduzierbare Mischungsbedingungen zu schaffen, bevor Mischungsbestandteile der Fertigmischung in die Mischkammer eingesetzt werden. Nach dem Vorheizen, das in gleicher Weise wie das Vorheizen der

Mischkammer zum Mischen der Grundmischung erfolgt, werden folgende Mischungsbestandteile der Fertigmischung eingesetzt:
- Die Grundmischungsfelle, ggf. zerkleinert.
- Polyglykol 1 - 10 phr verhindert ein Verkleben der Mischungsbestandteile mit den Innenwänden des Mischers.
- Netzmittel, nämlich Kalziumsalz von Fettsäuren und/oder Amidester 1 - 7 phr verbessert die Mischbarkeit zwischen den Füllstoffen, dem Ruß und dem Rohpolymer (Kautschuk).
- Amidwachs 1 - 7 phr reduziert die Klebrigkeit der Mischungsbestandteile.
- Silan-Haftvermittler 1 - 5 phr bewirkt die chemische Bindung zwischen Füllstoff und Rohpolymer (Kautschuk).
- Kettenverlängerer aus der Gruppe der Diamine, vorzugsweise ein Diamin mit zwei übereinstimmenden NH₂-Gruppen und einer Ringstruktur 0,5 - 5 phr als Vernetzungsmittel fungiert mit den beiden gleichwertigen NH₂ Gruppen als verbindendes Glied zwischen zwei Molekülketten der PECUs.
- Hydrolyse-Stabilisator 1 - 10 phr als Alterungsschutzmittel.
- Silikat 60-150 phr und Silikat mit funktionalisierter, insbesondere silanisierter Oberfläche 5-25 phr als Füllstoffe verbessern durch die Anbindung der Kautschukmoleküle an die Oberfläche der Füllstoffe die mechanischen Eigenschaften des herzustellenden Elastomer-Werkstoffs.
- Weichmacheröl 10-60 phr ist verantwortlich für die Dauerelastizität des herzustellenden Elastomer-werkstoffs.

Die eingesetzten Mischungsbestandteile der nicht aktivierten Fertigmischung werden gemischt und auf eine Temperatur in einem Temperaturfenster von 90° C bis 110°C gebracht. Die Messung der Temperatur der Mischungsbestandteile der Fertigmischung erfolgt mittels eines Temperatursensors, beispielsweise eines Thermoelementes. Hierbei handelt es sich vorzugsweise um denselben Temperatursensor, der auch die Temperatur der Vorheizmischung und der Grundmischung bzw. von deren Bestandteilen erfasst.

Anschließend erfolgt unmittelbar oder mit zeitlicher Verzögerung, die bis zu mehrere Monate betragen kann, das Aktivieren der nicht aktivierten Fertigmischung durch Einmischen peroxidischer Vernetzer und/oder schwefelbasierter Vulkanisationssysteme 0,5 - 10 phr als Vernetzungsmittel und sodann das anschließende Abkühlen der Fertigmischung.

Die Aktivierung der nicht aktivierten Fertigmischung ist in einer ersten, energetisch und prozesstechnisch vorteilhaften Variante des erfindungsgemäßen Verfahrens gemäß den Merkmalen des Anspruchs 2 ohne zeitliche Unterbrechung in den Mischprozess in der zweiten Stufe eingebunden. Das anschließende Abkühlen der Fertigmischung erfolgt, wie bei derartigen Verfahren üblich, unmittelbar im Anschluss an die Aktivierung.

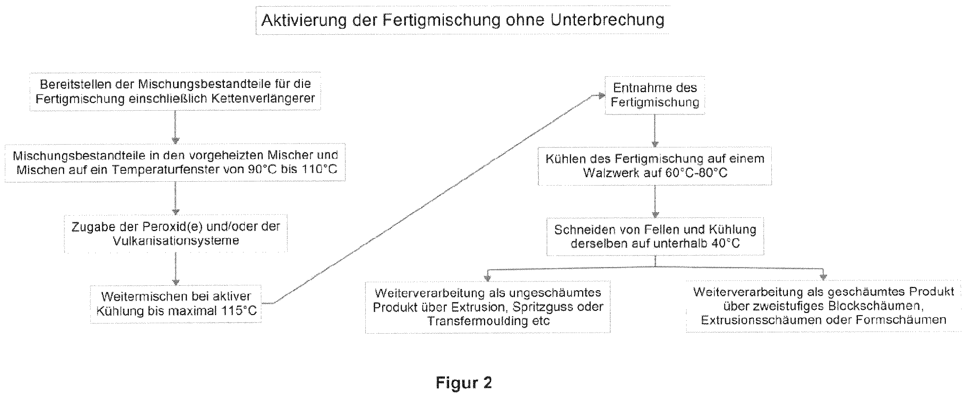

In dieser ersten, in Figur 2 dargestellten Variante der 2. Stufe des erfindungsgemäßen Verfahrens werden peroxidische Vernetzer und/oder schwefelbasierte Vulkanisationssysteme, die Schwefel und Hilfsstoffe zur Aktivierung umfassen, mit einem Anteil von 0,5 -10 phr zur Vernetzung der organischen Komponenten als weitere Mischungsbestandteile in die auf eine Temperatur in dem Temperaturfenster von 90° C bis 110° C erhitzten Mischungsbestandteile der Fertigmischung eingesetzt.

Das Mischen wird zur Verteilung der weiteren Mischungsbestandteile in der Fertigmischung fortgesetzt. Im Anschluss an das Mischen wird die Fertigmischung ohne Abkühlphase aus der Mischkammer entnommen.

Unmittelbar nach der Entnahme wird die Fertigmischung mit Kühlwalzen eines Walzwerks gewalzt und dabei auf eine Temperatur von 60 - 80°C abgekühlt. Mittels eines Temperatursensors, beispielsweise eines Thermoelementes, wird die Temperatur von Proben der Fertigmischung so oft wie erforderlich erfasst, bis die Abkühltemperatur in dem Bereich zwischen 60 - 80°C erreicht ist. Zur Probennahme werden die Kühlwalzen angehalten.

Die sich auf den Kühlwalzen bildenden Fertigmischungsfelle werden abgezogen und auf eine Temperatur unterhalb von 40°C, vorzugsweise auf Umgebungstemperatur abgekühlt. Die Temperatur kann mittels eines Temperatursensors, beispielsweise eines Thermoelementes, erfasst werden. Bei einer ausreichend langen Lagerung der Fertigmischungsfelle kann ohne gesonderte Temperaturmessung von einer ausreichenden Abkühlung auf eine Temperatur unterhalb von 40°C ausgegangen werden.

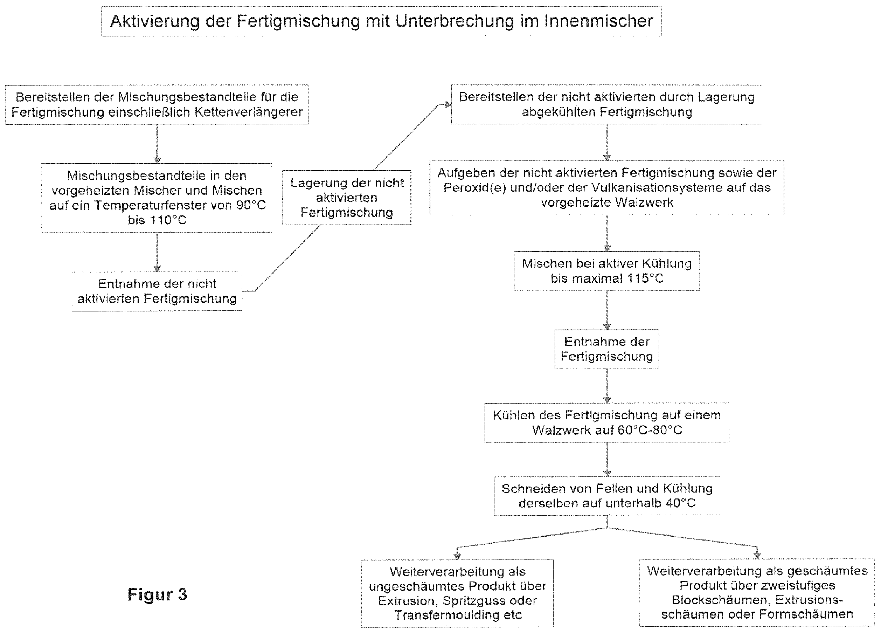

Eine verzögerte Aktivierung der nicht aktivierten Fertigmischung zu Verbesserung von deren Lagerfähigkeit und das sich unmittelbar anschließende Abkühlen der aktivierten Fertigmischung ergibt sich in einer zweiten Variante des erfindungsgemäßen Verfahrens aus den Merkmalen des Anspruchs 3. Die zweite Stufe der zweiten Variante des erfindungsgemäßen Verfahrens mit zeitverzögerter Aktivierung im Innenmischer ist in Figur 3 dargestellt. Die nicht aktivierte Mischung ist zu Beginn der zeitlich verzögerten Aktivierung abgekühlt, insbesondere auf die Umgebungstemperatur des Lagerorts, bevor sie zusammen mit den peroxidischen Vernetzer und/oder schwefelbasierten Vulkanisationssysteme als weitere Mischungsbestandteile in die auf die Vorheiztemperatur vorgeheizte Mischkammer, eingesetzt wird.

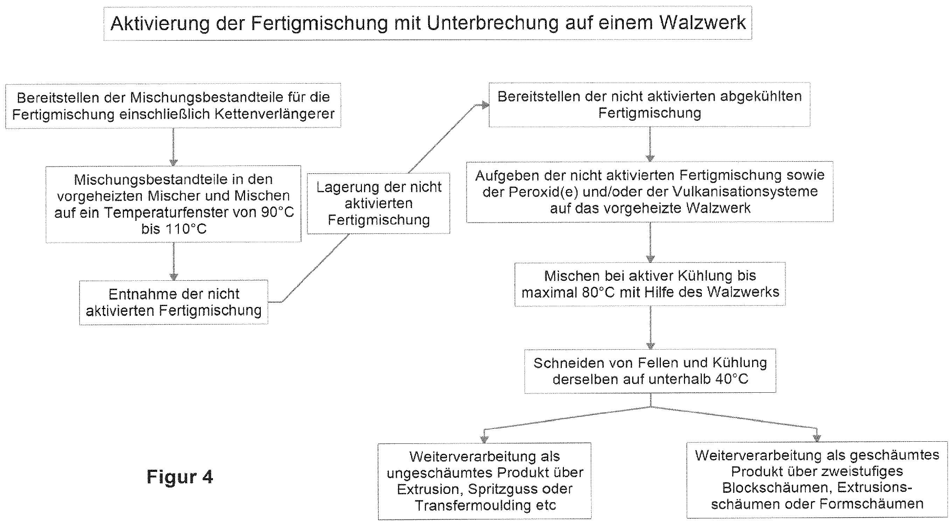

Eine weitere Möglichkeit zur verzögerten Aktivierung der nicht aktivierten Fertigmischung zur Verbesserung von deren Lagerfähigkeit und das sich unmittelbar anschließende Abkühlen der Fertigmischung ergibt sich in einer dritten Variante des erfindungsgemäßen Verfahrens aus den Merkmalen des Anspruchs 4. Die zweite Stufe der dritten Variante des erfindungsgemäßen Verfahrens mit zeitverzögerter Aktivierung mit Hilfe eines Walzwerks ist in Figur 4 dargestellt. Das Einmischen der weiteren Mischungsbestandteile zum Aktivieren der nicht aktivierten Fertigmischung erfolgt in dieser Ausgestaltung des Verfahrens mit Hilfe der vorgeheizten Walzen im Walzenspalt des Walzwerks. Die nicht aktivierte Fertigmischung ist zu Beginn der zeitlich verzögerten Aktivierung abgekühlt, insbesondere auf die Umgebungstemperatur des Lagerorts, bevor diese zusammen mit den peroxidischen Vernetzern und/oder schwefelbasierten Vulkanisationssystemen als weitere Mischungsbestandteile auf die vorgeheizten Walzen des Walzwerks aufgegeben wird.

Sofern der Elastomer-Werkstoff, d.h. die aktivierte Fertigmischung (Masterbatch) für ein geschäumtes Produkt verwendet werden soll, werden in die auf die Vorheiztemperatur vorgeheizte Mischkammer folgende weiteren Mischungsbestandteile der Fertigmischung eingesetzt:
- Schäumungsmittel 1-33 phr als Gasbildner.
- Harnstoff 0,5-5 phr und Zinkoxid 0,5-5 phr beeinflussen die Zersetzungstemperatur des Gasbildners.

Die unter zusätzlicher Verwendung der vorgenannten Mischungsbestandteile in der Fertigmischung hergestellten und abgekühlten Fertigmischungsfelle lassen sich in an sich bekannten Schäumverfahren zu einem Schaumstoff verarbeiten.

Zur Erzielung einer gleichbleibenden Qualität müssen die Prozessparameter für die Herstellung des Elastomer-Werkstoffs in mehreren, diskontinuierlich hergestellten Chargen stets konstant gehalten werden, insbesondere die Temperaturen für das Einsetzen und Entnehmen der Grund - und Fertigmischung sowie die Abkühltemperaturen in den jeweils angegebenen Temperaturfenstern, die Betriebsparameter des Innenmischers, insbesondere dessen Drehzahl sowie die konkret gewählten Mengenanteile der Mischungsbestandteile von Grund- und Fertigmischung innerhalb der angegebenen Bereiche.

Die nachfolgenden Beispiele 1-3 beziehen sich auf Grund- und Fertigmischungen für geschäumte und nicht geschäumte Anwendungen:
**Beispiel 1** betrifft eine Grund- und Fertigmischung zur Herstellung eines elastomeren Werkstoffs als aktivierter Masterbatch für ein nicht geschäumtes Produkt, nämlich eine weiche Dichtung mit einer SHORE A-Härte ≤ 40:

### Beispiel 1 : Grundmischung für weiche Dichtung

| | **Grundmischung phr** |
|---|---|
| PECUs | 100 |
| Printruß | 30 |
| Polyglykol | 3 |
| Amidwachs | 5 |
| Kettenverlängerer | 1 |
| Silikat | 2 |
| Substituierte Amide | 0, 5 |
| Summe | 141, 5 |

### Verfahrensführung 1. Stufe (Grundmischung weiche Dichtung):

Vorheizen des Innenmischers auf 95 °C,
Einstellen der Solltemperatur für aktive Kühlung 160 °C, Drehzahl der Mischkammer 66 U/min.

Einsetzen der folgenden Mischungsbestandteile der Grundmischung in die vorgeheizte Mischkammer bei ca. 80 °C:
- PECUs, Printruß, Polyglykol, Amidwachs und Kettenverlängerer.

Schließen der Mischkammer und Mischen der vorgenannten Mischungsbestandteile bis 160°C (Temperatur oberhalb der Schmelztemperatur der PECUs).

Einsetzen der weiteren Mischungsbestandteile Silikat und substituierte Amide nach Erreichen der Schmelztemperatur oberhalb von 160 °C.

Fortsetzen des Mischens und Abkühlen bis 110 °C mit einer Drehzahl der Mischkammer von 20 U/min bei einer Solltemperatur für die aktive Kühlung von 100°C.

Entnehmen der abgekühlten Grundmischung sowie Abziehen der Grundmischungsfelle von den Kühlwalzen.

### Beispiel 1 : Fertigmischung für weiche Dichtung

| | **Fertigmischung** |
|---|---|
| | **phr** |
| Grundmischungsfelle | 141, 5 |
| Silikat/funktionalisiertes Silikat | 70 |
| Substituierte Amide | 5 |
| Weichmacheröl | 50 |
| Polyglykol | 3 |
| Netzmittel, nämlich Kalziumsalz von Fettsäuren und/oder Amidester | 3 |
| Amidwachs | 4 |
| Silan-Haftvermittler | 1, 5 |
| Kettenverlängerer | 1 |
| Hydrolyse-Stabilisator | 5 |
| Peroxidische Vernetzer | 4 |

### Verfahrensführung 2. Stufe (Fertigmischung weiche Dichtung):

Vorheizen des Innenmischers auf 80 °C, Einstellen der Solltemperatur für aktive Kühlung 100 °C, Drehzahl der Mischkammer 66 U/min.

Einsetzen der folgenden Mischungsbestandteile der Fertigmischung in die vorgeheizte Mischkammer bei ca. 80 °C:
- Grundmischungsfelle, Polyglykol, Netzmittel, Amidwachs, Silan-Haftvermittler, Kettenverlängerer, Hydrolyse-Stabilisator, Silikate, Weichmacheröl, substituierte Amide.

Einsetzen der weiteren Mischungsbestandteile peroxidische Vernetzer oberhalb von 90 °C.

Schließen der Mischkammer und Fortsetzen des Mischens der Fertigmischung auf eine Temperatur bis maximal 115 °C.

Entnehmen der Fertigmischung ohne Abkühlphase sowie Abziehen der Fertigmischungsfelle von den Kühlwalzen.

Abkühlen der Fertigmischungsfelle auf eine Temperatur unterhalb von 40°C.

**Beispiel 2** betrifft eine Grund- und Fertigmischung zur Herstellung eines elastomeren Werkstoffs als aktivierter Masterbatch für ein nicht geschäumtes Produkt, nämlich eine harte Dichtung mit einer SHORE A-Härte ≥ 40:

### Beispiel 2 : Grundmischung für harte Dichtung

| | **Grundmischung phr** |
|---|---|
| PECUs | 100 |
| Printruß | 35 |
| Polyglykol | 3 |
| Amidwachs | 5 |
| Kettenverlängerer | 1, 5 |
| Silikat | 2 |
| Substituierte Amide | 0, 5 |
| Summe | 147 |

### Verfahrensführung 1. Stufe (Grundmischung harte Dichtung):

Vorheizen des Innenmischers auf 95 °C,
Einstellen der Solltemperatur für aktive Kühlung 160 °C, Drehzahl der Mischkammer 66 U/min.

Einsetzen der folgenden Mischungsbestandteile der Grundmischung in die vorgeheizte Mischkammer bei ca. 80 °C:
- PECUs, Printruß, Polyglykol, Amidwachs und Kettenverlängerer.

Schließen der Mischkammer und Mischen der vorgenannten Mischungsbestandteile bis 160°C (Temperatur oberhalb der Schmelztemperatur der PECUs.

Einsetzen der weiteren Mischungsbestandteile Silikat und substituierte Amide nach Erreichen der Schmelztemperatur oberhalb von 160 °C.

Fortsetzen des Mischens und Abkühlen bis 110 °C mit einer Drehzahl der Mischkammer von 20 U/min bei einer Solltemperatur für die aktive Kühlung von 100°C.

Entnehmen der abgekühlten Grundmischung sowie Abziehen der Grundmischungsfelle von den Kühlwalzen.

### Beispiel 2 : Fertigmischung für harte Dichtung

| | **Fertigmischung** |
|---|---|
| | **phr** |
| Grundmischungsfelle | 147 |
| Silikat/funktionalisiertes Silikat | 100 |
| Substituierte Amide | 25 |
| Weichmacheröl | 35 |
| Polyglykol | 3 |
| Netzmittel, nämlich Kalziumsalz von Fettsäuren und/oder Amidester | 4 |
| Amidwachs | 5 |
| Silan-Haftvermittler | 2, 5 |
| Kettenverlängerer | 2 |
| Hydrolyse-Stabilisator | 5 |
| Peroxidische Vernetzer | 4, 2 |

### Verfahrensführung 2. Stufe (Fertigmischung harte Dichtung):

Vorheizen des Innenmischers auf 80 °C,
Einstellen der Solltemperatur für aktive Kühlung 100 °C, Drehzahl der Mischkammer 66 U/min.

Einsetzen der folgenden Mischungsbestandteile der Fertigmischung in die vorgeheizte Mischkammer bei ca. 80 °C:
- Grundmischungsfelle, Polyglykol, Netzmittel, Amidwachs, Silan-Haftvermittler, Kettenverlängerer, Hydrolyse-Stabilisator, Silikate, Weichmacheröl, substituierte Amide.

Einsetzen der weiteren Mischungsbestandteile peroxidische Vernetzer oberhalb von 90 °C.

Schließen der Mischkammer und Fortsetzen des Mischens der Fertigmischung auf eine Temperatur bis maximal 115 °C.

Entnehmen der Fertigmischung ohne Abkühlphase sowie Abziehen der Fertigmischungsfelle von den Kühlwalzen.

Abkühlen der Fertigmischungsfelle auf eine Temperatur unterhalb von 40°C.

**Beispiel 3** betrifft eine Grund- und Fertigmischung zur Herstellung eines elastomeren Werkstoffs als aktivierter Masterbatch für geschäumte Produkte:

### Beispiel 3 : Grundmischung für geschäumte Produkte

| | **Grundmischung** |
|---|---|
| | **phr** |
| PECUs | 100,0 |
| Printruß | 40,0 |
| Polyglykol | 2,0 |
| Amidwachs | 2,0 |
| Kettenverlängerer | 0,5 |
| Silikat | 2,0 |
| Substituiertes Amid | 0,5 |
| Summe | 147,0 |

### Verfahrensführung 1. Stufe (Grundmischung geschäumte Produkte):

Vorheizen des Innenmischers auf 95 °C,
Einstellen der Solltemperatur für aktive Kühlung 160 °C, Drehzahl der Mischkammer 66 U/min.

Einsetzen der folgenden Mischungsbestandteile der Grundmischung in die vorgeheizte Mischkammer bei ca. 80 °C:
- PECUs, Printruß, Polyglykol, Amidwachs und Kettenverlängerer.

Schließen der Mischkammer und Mischen der vorgenannten Mischungsbestandteile bis 160°C (Temperatur oberhalb der Schmelztemperatur der PECUs).

Einsetzen der weiteren Mischungsbestandteile Silikat und substituierte Amide nach Erreichen der Schmelztemperatur oberhalb von 160 °C.

Fortsetzen des Mischens und Abkühlen bis 110 °C mit einer Drehzahl der Mischkammer von 20 U/min bei einer Solltemperatur für die aktive Kühlung von 100°C.

Entnehmen der abgekühlten Grundmischung sowie Abziehen der Grundmischungsfelle von den Kühlwalzen.

### Beispiel 3 : Fertigmischung für geschäumte Produkte

| | Fertigmischung Schaum |
|---|---|
| | phr |
| Grundmischungsfell | 147 |
| Schäumungsmittel | 13 |
| Silikat | 85 |
| Funktionalisiertes Silikat | 15 |
| Weichmacher | 45 |
| Polyglykol | 2 |
| Kalziumsalz von Fettsäuren und/oder Amidestern | 2 |
| Amidwachs | 2 |
| Silan-Haftvermittle | 1, 5 |
| Kettenverlängerer | 1 |
| Hydrolyse-Stabilisator | 3, 00 |
| Kicker 1 Urea | 1, 55 |
| Kicker 2 ZnO | 1, 04 |
| Peroxid 2, CAS: 6731-36-8 | 0, 35 |
| Peroxid 1, CAS: 25155-25-3 | 1, 20 |

### Verfahrensführung 2. Stufe (Fertigmischung geschäumte Produkte):

Vorheizen des Innenmischers auf 80 °C,
Einstellen der Solltemperatur für aktive Kühlung 100 °C, Drehzahl der Mischkammer 66 U/min.

Einsetzen der folgenden Mischungsbestandteile der Fertigmischung in die vorgeheizte Mischkammer bei ca. 80 °C:
- Grundmischungsfelle, Schäumungsmittel, Harnstoff, Zinkoxid, Polyglykol, Netzmittel, Amidwachs, Silan-Haftvermittler, Kettenverlängerer, Hydrolyse-Stabilisator, Silikate, Weichmacheröl.

Einsetzen der weiteren Mischungsbestandteile Peroxid 1, 2 als Vernetzer oberhalb von 90 °C.

Schließen der Mischkammer und Fortsetzen des Mischens der Fertigmischung auf eine Temperatur bis maximal 115 °C.

Entnehmen der Fertigmischung ohne Abkühlphase sowie Abziehen der Fertigmischungsfelle von den Kühlwalzen.

Abkühlen der Fertigmischungsfelle auf eine Temperatur unterhalb von 40°C.

## Patentansprüche

1. Verfahren zur Herstellung eines Elastomer-Werkstoffs mit verbesserter Verarbeitungsfähigkeit unter Verwendung eines Polyurethans, basierend auf der Umsetzung eines ungesättigten Polyethercarbonatpolyols (PEC) mit einem mehrfunktionellen Isocyanat, wobei das ungesättigte Polyethercarbonatpolyol auf der Umsetzung von CO₂ mit einem Alkylenoxid basiert, als Rohpolymer (PECUs) umfassend folgende Schritte:
- Vorheizen eines Innenmischers mit geschlossener Mischkammer auf eine Vorheiztemperatur in einem Temperaturfenster zwischen 50 - 100 ° C,
- Einsetzen von folgenden Mischungsbestandteilen einer Grundmischung in die auf die Vorheiztemperatur vorgeheizte Mischkammer:
- PECUs 100 phr als Rohpolymer,
- Ruß 20 - 60 phr als Farbstoff,
- Polyglykol 1 - 10 phr als Verarbeitungshilfsmittel,
- Amidwachs 1 - 10 phr als Verarbeitungshilfsmittel,
- Kettenverlängerer aus der Gruppe der Diamine mit zwei übereinstimmenden NH₂-Gruppen als Vernetzungsmittel,
- Mischen und Erhitzen der Mischungsbestandteile der Grundmischung auf eine Temperatur oberhalb der Schmelztemperatur der PECUs,
- Einsetzen von folgenden weiteren Mischungsbestandteilen der Grundmischung in die auf eine Temperatur oberhalb der Schmelztemperatur der PECUs vorgeheizten Mischungsbestandteile:
- Silikat 1-10 phr als Füllstoff,
- substituierte Amide 0,5 - 5 phr als Verarbeitungshilfsmittel,
- Fortsetzen des Mischens und Abkühlen der Grundmischung auf eine Abkühltemperatur in einem Temperaturfenster zwischen 100 - 120° C,
- Entnehmen der auf die Abkühltemperatur abgekühlten Grundmischung,
- Walzen der entnommenen Grundmischung und weiteres Abkühlen der Grundmischung mit kühlbaren Walzen eines Walzwerks auf eine Temperatur von 60 - 80°C,
- Abziehen von sich auf den kühlbaren Walzen beim Abkühlen bildenden Grundmischungsfellen,
- anschließendes Abkühlen der Grundmischungsfelle auf eine Temperatur unterhalb von 40°C,
- Vorheizen des Innenmischers oder eines weiteren Innenmischers mit geschlossener Mischkammer auf eine Vorheiztemperatur in einem Temperaturfenster zwischen 50 - 100° C,
- Einsetzen von folgenden Mischungsbestandteilen einer Fertigmischung in die auf die Vorheiztemperatur vorgeheizte Mischkammer:
- die Grundmischungsfelle von 124 - 200 phr
- Polyglykol 1 - 10 phr als Verarbeitungshilfsmittel,
- Netzmittel, nämlich Kalziumsalze von Fettsäuren und/oder Amidester 1 - 7 phr als Verarbeitungshilfsmittel,
- Amidwachs 1 - 7 phr als Verarbeitungshilfsmittel,
- Silan-Haftvermittler 1 - 5 phr als Vernetzungsmittel,
- Kettenverlängerer aus der Gruppe der Diamine mit zwei übereinstimmenden NH₂-Gruppen 0,5 - 5 phr als Vernetzungsmittel,
- Hydrolyse-Stabilisator 1 - 10 phr als Alterungsschutzmittel,
- Silikat 60-150 phr als Füllstoff,
- Silikat mit funktionalisierter Oberfläche 5-25 phr als Füllstoff,
- Weichmacheröl 10-60 phr als Weichmacher,
- Mischen und Erhitzen der Mischungsbestandteile der nicht aktivierten Fertigmischung auf eine Temperatur in einem Temperaturfenster von 90° C bis 110°C,
- Aktivieren der nicht aktivierten Fertigmischung durch Einmischen peroxidischer Vernetzer und/oder schwefelbasierter Vulkanisationssysteme 0,5 - 10 phr als Vernetzungsmittel und
- anschließendes Abkühlen der Fertigmischung.

2. Verfahren nach Anspruch 1, **dadurch gekennzeichnet, dass** das Aktivieren der nicht aktivierten Fertigmischung und das anschließende Abkühlen der Fertigmischung folgende weiteren Schritte umfasst:
- Einsetzen der peroxidische Vernetzer und/oder schwefelbasierte Vulkanisationssysteme als weitere Mischungsbestandteile ohne Unterbrechung des Mischvorgangs in die auf eine Temperatur in dem Temperaturfenster von 90° C bis 110° C erhitzten Mischungsbestandteile in die Mischkammer des Innenmischers,
- Fortsetzen des Mischens bis zu einer maximalen Temperatur von 115°C, um die weiteren Mischungsbestandteile zu verteilen,
- Entnehmen der fertig gemischten Fertigmischung ohne Abkühlphase aus der Mischkammer,
- Walzen der entnommenen Fertigmischung und Abkühlen der Fertigmischung mit kühlbaren Walzen eines Walzwerks auf eine Temperatur von 60 - 80°C,
- Abziehen von sich auf den kühlbaren Walzen beim Abkühlen bildenden Fertigmischungsfellen,
- und anschließendes Abkühlen der Fertigmischungsfelle auf eine Temperatur unterhalb von 40°C.

3. Verfahren nach Anspruch 1, **dadurch gekennzeichnet, dass** das Aktivieren der nicht aktivierten Fertigmischung und das anschließende Abkühlen der Fertigmischung folgende weiteren Schritte umfasst:
- Vorheizen des Innenmischers oder eines weiteren Innenmischers mit geschlossener Mischkammer auf eine Vorheiztemperatur in einem Temperaturfenster zwischen 50 - 100° C,
- Einsetzen der nicht aktivierten Fertigmischung sowie der peroxidischen Vernetzer und/oder schwefelbasierten Vulkanisationssysteme als weitere Mischungsbestandteile in die auf die Vorheiztemperatur vorgeheizte Mischkammer,
- Mischen bis zu einer maximalen Temperatur von 115°C, um die weiteren Mischungsbestandteile zu verteilen,
- Entnehmen der fertig gemischten Fertigmischung ohne Abkühlphase aus der Mischkammer,
- Walzen der entnommenen Fertigmischung und Abkühlen der Fertigmischung mit kühlbaren Walzen eines Walzwerks auf eine Temperatur von 60 - 80°C,
- Abziehen von sich auf den kühlbaren Walzen beim Abkühlen bildenden Fertigmischungsfellen,
- und anschließendes Abkühlen der Fertigmischungsfelle auf eine Temperatur unterhalb von 40°C.

4. Verfahren nach Anspruch 1, **dadurch gekennzeichnet, dass** das Aktivieren der nicht aktivierten Fertigmischung und das anschließende Abkühlen der Fertigmischung folgende weiteren Schritte umfasst:
- Vorheizen der Walzen eines Walzwerks auf eine Temperatur von oberhalb 60° C,
- Aufgeben der nicht aktivierten Fertigmischung sowie der peroxidischen Vernetzer und/oder schwefelbasierten Vulkanisationssysteme als weitere Mischungsbestandteile auf die auf die Vorheiztemperatur vorgeheizten Walzen des Walzwerks,
- Mischen der auf die vorgeheizten Walzen aufgegebenen weiteren Mischungsbestanteile bis zu einer maximalen Temperatur von 80°C, um die weiteren Mischungsbestandteile zu verteilen,
- Abziehen von sich auf den Walzen bildenden Fertigmischungsfellen,
- und anschließendes Abkühlen der Fertigmischungsfelle auf eine Temperatur unterhalb von 40°C.

5. Verfahren nach einem der Ansprüche 1 bis 4, **dadurch gekennzeichnet, dass** in die auf die Vorheiztemperatur vorgeheizte Mischkammer folgende weiteren Mischungsbestandteile der Fertigmischung eingesetzt werden:
- Schäumungsmittel 1-33 phr,
- Harnstoff 0,5-5 phr und
- Zinkoxid 0,5-5 phr.

6. Verfahren nach Anspruch 5, **dadurch gekennzeichnet, dass** die abgekühlten Fertigmischungsfelle in einem Schäumverfahren zu einem Schaumstoff verarbeitet werden.

7. Verfahren nach einem der Ansprüche 1 bis 6, **dadurch gekennzeichnet, dass** der Kettenverlängerer ein Diamin mit zwei übereinstimmenden NH₂-Gruppen und einer Ringstruktur ist.

8. Verfahren nach einem der Ansprüche 1 bis 7, **dadurch gekennzeichnet, dass** der Kettenverlängerer 4,4'-methylenebis (3-chlor-2,6-diethylaniline) ist.

9. Verfahren nach einem der Ansprüche 1 bis 8, **dadurch gekennzeichnet, dass** die Prozessparameter für die Herstellung des Elastomer-Werkstoffs in mehreren, diskontinuierlich hergestellten Chargen nicht verändert werden.

10. Verfahren nach einem der Ansprüche 1 bis 9, **dadurch gekennzeichnet, dass** die Grundmischungsfelle zerkleinert werden und die zerkleinerten Grundmischungsfelle als Mischungsbestandteil der Fertigmischung in die vorgeheizte Mischkammer eingesetzt werden.

11. Aktivierter Masterbatch, herstellbar mit einem Verfahren nach einem der Ansprüche 1 bis 10.

## Claims

1. Process for producing an elastomer material with improved processability using a polyurethane based on the reaction of an unsaturated polyether carbonate polyol (PEC) with a multifunctional isocyanate, wherein the unsaturated polyether carbonate polyol is based on the reaction of CO₂ with an alkylene oxide, as raw polymer (PECUs) comprising the following steps:
- preheating an internal mixer with a closed mixing chamber to a preheating temperature in a temperature range between 50 - 100°C,
- inserting the following mixture components of a base mixture into the mixing chamber, which has been preheated to the preheating temperature:
- PECUs 100 phr as raw polymer,
- carbon black 20 - 60 phr as dye,
- polyglycol 1 - 10 phr as processing aid,
- amide wax 1 - 10 phr as processing aid,
- chain extender from the group of diamines with two matching NH₂ groups as cross-linking agent,
- mixing and heating the mixture components of the base mixture to a temperature above the melting temperature of the PECUs,
- inserting the following additional mixture components of the base mixture into the mixture components that have been preheated to a temperature above the melting temperature of the PECUs:
- silicate 1-10 phr as a filler,
- substituted amides 0.5 - 5 phr as a processing aid,
- continue mixing and cooling of the base mixture to a cooling temperature in a temperature range between 100 - 120°C,
- removal of the base mixture, which has cooled down to the cooling temperature,
- rolling of the removed base mixture and further cooling of the base mixture with coolable rollers of a rolling mill to a temperature of 60 - 80°C,
- pulling off base mixture skins that form on the coolable rollers during cooling,
- subsequent cooling of the base mixture skins to a temperature below 40°C,
- preheating the internal mixer or another internal mixer with a closed mixing chamber to a preheating temperature in a temperature range between 50 - 100°C,
- insertion of the following mixture components of a final mixture into the mixing chamber preheated to the preheating temperature:
- the base mixture skins of 124 - 200 phr
- polyglycol 1 - 10 phr as processing aid,
- wetting agent, namely calcium salts of fatty acids and/or amide ester 1 - 7 phr as processing aid,
- amide wax 1 - 7 phr as a processing aid,
- silane adhesion promoter 1 - 5 phr as a cross-linking agent,
- chain extenders from the group of diamines with two matching NH₂ groups 0.5 - 5 phr as a cross-linking agent,
- hydrolysis stabilizer 1 - 10 phr as an anti-ageing agent,
- silicate 60-150 phr as filler,
- silicate with functionalized surface 5-25 phr as filler,
- process oil 10-60 phr as a plasticizer,
- mixing and heating of the mixture components of the non-activated final mixture to a temperature in a temperature range of 90°C to 110°C,
- activation of the non-activated final mixture by mixing in peroxidic cross-linking agents and/or sulphur-based vulcanization systems 0.5 - 10 phr as cross-linking agent and
- subsequent cooling of the finished mixture.

2. Process according to Claim 1, **characterized in that** the activation of the non-activated final mixture and the subsequent cooling of the final mixture comprises the following further steps:
- without interrupting the mixing process insertion of the peroxidic cross-linking agent and/or sulphur-based vulcanization systems as further mixture components into the mixture components heated to a temperature in the temperature range of 90°C to 110°C in the mixing chamber of the internal mixer,
- continue mixing to a maximum temperature of 115°C to disperse the other mixture components,
- removing the ready-mixed final mixture from the mixing chamber without a cooling phase,
- rolling the removed final mixture and cooling the final mixture with coolable rollers of a rolling mill to a temperature of 60 - 80°C,
- pulling off the final mixture skins that form on the coolable rollers during cooling,
- and subsequent cooling of the final mixture skins to a temperature below 40°C.

3. Process according to Claim 1, **characterized in that** the activation of the non-activated final mixture and the subsequent cooling of the final mixture comprises the following further steps:
- preheating the internal mixer or another internal mixer with a closed mixing chamber to a preheating temperature in a temperature range between 50 - 100°C,
- insertion of the non-activated final mixture and the peroxidic cross-linking agent and/or sulphur-based vulcanization systems as further mixture components in the mixing chamber that has been preheated to the preheating temperature,
- mixing up to a maximum temperature of 115°C to disperse the other mixture components,
- removing the ready-mixed final mixture from the mixing chamber without a cooling phase,
- rolling the removed final mixture and cooling the final mixture with coolable rolls of a rolling mill to a temperature of 60 - 80°C,
- pulling off final mixture skins formed on the coolable rollers during cooling,
- and subsequent cooling of the final mixture skins to a temperature below 40°C.

4. Process according to Claim 1, **characterized in that** the activation of the non-activated final mixture and the subsequent cooling of the final mixture comprises the following further steps:
- preheating the rollers of a rolling mill to a temperature above 60°C,
- feeding the non-activated final mixture and the peroxidic crosslinkers and/or sulphur-based vulcanization systems as further mixture components onto the rollers of the rolling mill, which have been preheated to the preheating temperature,
- mixing the other mixture components transferred onto the preheated rollers up to a maximum temperature of 80°C in order to distribute the other mixture components,
- pulling off final mixture skins formed on the rollers,
- and subsequent cooling of the final mixture skins to a temperature below 40°C.

5. Process according to one of Claims 1 to 4, **characterized in that** the following further mixture components of the final mixture are used in the mixing chamber preheated to the preheating temperature:
- foaming agent 1-33 phr,
- urea 0.5-5 phr and
- zinc oxide 0.5-5 phr.

6. Process according to Claim 5, **characterized in that** the cooled final mixture skins are processed into a foam in a foaming process.

7. Process according to any one of Claims 1 to 6, **characterized in that** the chain extender is a diamine with two matching NH₂ groups and a ring structure.

8. Process according to any one of Claims 1 to 7, **characterized in that** the chain extender is 4,4'-methylenebis (3-chloro-2, 6-diethylaniline).

9. Process according to one of Claims 1 to 8, **characterized in that** the process parameters for the production of the elastomer material are not changed in several discontinuously produced batches.

10. Process according to one of Claims 1 to 9, **characterized in that** the base mixture skins are comminuted and the comminuted base mixture skins are used as a mixture component of the finished mixture in the preheated mixing chamber.

11. Activated master batch, that can be produced using a process according to any one of Claims 1 to 10.

## Revendications

1. Procédé, destiné à produire une matière élastomère dotée d'une aptitude à la mise en oeuvre améliorée, en utilisant un polyuréthane, basé sur la transformation d'un polyol de polyéther carbonate (PEC) insaturé avec un isocyanate plurifonctionnel, le polyol de polyéther carbonate insaturé étant basé sur la transformation de CO₂ avec un oxyde d'alkylène en tant qu'un polymère brut (pecus), comprenant les étapes suivantes, consistant à :
- préchauffer un mélangeur interne pourvu d'une chambre de mélange fermée, à une température de préchauffage dans une fenêtre de température comprise entre 50 et 100°C,
- introduire les constituants de mélange suivants d'un mélange de base dans la chambre de mélange préchauffée à la température de préchauffage :
- des pecus, de 100 pce en tant que polymère brut,
- du noir de carbone, de 20 à 60 pce en tant que colorant,
- un polyglycol, de 1 à 10 pce en tant qu'auxiliaire de mise en oeuvre,
- une cire d'amide, de 1 à 10 pce en tant qu'auxiliaire de mise en oeuvre,
- des allongeurs de chaîne du groupe des diamines dotés de deux groupes NH₂ concordants, en tant qu'agents de réticulation,
- mélanger et chauffer les constituants de mélange du mélange de base à une température supérieure à la température de fusion des pecus,
- introduire les constituants de mélange supplémentaires suivants du mélange de base dans les constituants de mélange préchauffés à une température supérieure à la température de fusion des pecus :
- un silicate, de 1 à 10 pce en tant qu'agent de charge,
- des amides substitués, de 0,5 à 5 pce en tant qu'auxiliaires de mise en oeuvre,
- continuer de mélanger et faire refroidir le mélange de base à une température de refroidissement dans une fenêtre de température comprise entre 100 et 120°C,
- prélever le mélange de base refroidi à la température de refroidissement,
- laminer le mélange de base prélevé et continuer à faire refroidir le mélange de base avec des cylindres refroidissables d'un laminoir à une température de 60 à 80°C,
- retirer des peaux du mélange de base qui se forment sur les cylindres refroidissables lors du refroidissement,
- puis faire refroidir les peaux du mélange de base à une température inférieure à 40°C,
- préchauffer le mélangeur interne ou un mélangeur interne supplémentaire, pourvu d'une chambre de mélange fermée à une température de préchauffage dans une fenêtre de température comprise entre 50 et 100°C,
- introduire les constituants de mélange suivants d'un mélange final dans la chambre de mélange préchauffée à la température de préchauffage :
- les peaux du mélange de base, de 124 à 200 pce,
- un polyglycol, de 1 à 10 pce, en tant qu'auxiliaire de mise en oeuvre,
- des agents réticulants, à savoir des sels de calcium d'acides gras et / ou d'ester d'amide, de 1 à 7 pce, en tant qu'auxiliaires de mise en oeuvre,
- une cire d'amide, de 1 à 7 pce, en tant qu'auxiliaire de mise en oeuvre,
- des agents de couplage silane, de 1 à 5 pce, en tant qu'agents de réticulation,
- des allongeurs de chaîne du groupe des diamines, dotés de deux groupes NH₂ concordants, de 0,5 à 5 pce en tant qu'agents de réticulation,
- un stabilisateur d'hydrolyse, de 1 à 10 pce, en tant qu'agent antivieillissement,
- un silicate, de 60 à 150 pce, en tant qu'agent de charge,
- un silicate à surface fonctionnalisée, de 5 à 25 pce, en tant qu'agent de charge,
- une huile plastifiante, de 10 à 60 pce, en tant qu'agent plastifiant,
- mélanger et chauffer les constituants de mélange du mélange final non activé à une température dans une fenêtre de température de 90° C à 110°C,
- activer le mélange final non activé en y mélangeant des réticulants peroxydiques et / ou des systèmes de vulcanisation à base de soufre, de 0,5 à 10 pce en tant qu'agents de réticulation et
- faire refroidir ensuite le mélange final.

2. Procédé selon la revendication 1, **caractérisé en ce que** l'activation du mélange final non activé et le refroidissement consécutif du mélange final comprend les étapes supplémentaires suivantes, consistant à :
- introduire les réticulants peroxydiques et / ou les systèmes de vulcanisation à base de soufre en tant que constituants de mélange supplémentaires, sans interrompre le processus de mélange dans les constituants de mélange chauffés à une température dans la fenêtre de température comprise entre 90°C à 110°C dans la chambre de mélange du mélangeur interne,
- poursuivre le mélange jusqu'à une température maximale de 115°C, pour répartir les constituants de mélange supplémentaires,
- prélever le mélange final totalement mélangé de la chambre de mélange, sans phase de refroidissement,
- laminer le mélange final prélevé et faire refroidir le mélange final à l'aide de cylindres refroidissables d'un laminoir à une température de 60 à 80°C,
- retirer des peaux du mélange final qui se forment sur les cylindres refroidissables lors du refroidissement,
- puis faire refroidir les peaux du mélange final à une température inférieure à 40°C.

3. Procédé selon la revendication 1, **caractérisé en ce que** l'activation du mélange final non activé et le refroidissement consécutif du mélange final comprend les étapes supplémentaires suivantes, consistant à :
- préchauffer le mélangeur interne ou un mélangeur interne supplémentaire, pourvu d'une chambre de mélange fermée à une température de préchauffage dans une fenêtre de température comprise entre 50 et 100°C,
- introduire le mélange final non activé, ainsi que les réticulants peroxydiques et / ou les systèmes de vulcanisation à base de soufre en tant que constituants de mélange supplémentaires dans la chambre de mélange préchauffée à la température de préchauffage,
- mélanger jusqu'à une température maximale de 115°C, pour répartir les constituants de mélange supplémentaires,
- prélever le mélange final totalement mélangé de la chambre de mélange, sans phase de refroidissement,
- laminer le mélange final prélevé et faire refroidir le mélange final à l'aide de cylindres refroidissables d'un laminoir à une température de 60 à 80°C,
- retirer des peaux du mélange final qui se forment sur les cylindres refroidissables lors du refroidissement,
- puis faire refroidir les peaux du mélange final à une température inférieure à 40°C.

4. Procédé selon la revendication 1, **caractérisé en ce que** l'activation du mélange final non activé et le refroidissement consécutif du mélange final comprend les étapes supplémentaires suivantes, consistant à :
- préchauffer les cylindres d'un laminoir à une température supérieure à 60°C,
- distribuer le mélange final non activé, ainsi que les réticulants peroxydiques et / ou les systèmes de vulcanisation à base de soufre en tant que constituants de mélange supplémentaires sur les cylindres du laminoir préchauffés à la température de préchauffage,
- mélanger les composants de mélange supplémentaires distribués sur les cylindres préchauffés jusqu'à une température maximale de 80°C, pour répartir les constituants de mélange supplémentaires,
- retirer des peaux du mélange final qui se forment sur les cylindres,
- puis faire refroidir les peaux du mélange final à une température inférieure à 40°C.

5. Procédé selon l'une quelconque des revendications 1 à 4, **caractérisé en ce que** l'on introduit dans la chambre de mélange préchauffée à la température de préchauffage les constituants de mélange supplémentaires suivants du mélange final :
- des agents moussants, de 1 à 33 pce,
- de l'urée, de 0,5 à 5 pce et
- de l'oxyde de zinc, de 0,5 à 5 pce.

6. Procédé selon la revendication 5, **caractérisé en ce que** lors d'un procédé de moussage, l'on met en oeuvre les peaux du mélange final refroidies pour obtenir une mousse.

7. Procédé selon l'une quelconque des revendications 1 à 6, caractérisé en ce l'allongeur de chaîne est une diamine, dotée de deux groupes NH₂ concordants et une structure cyclique.

8. Procédé selon l'une quelconque des revendications 1 à 7, **caractérisé en ce que** l'allongeur de chaîne est une 4,4'- méthylène bis (3-chloro-2,6-diéthylaniline).

9. Procédé selon l'une quelconque des revendications 1 à 8, **caractérisé en ce que** l'on ne modifie pas les paramètres de processus pour la production de la matière élastomère dans plusieurs charges produites de manière discontinue.

10. Procédé selon l'une quelconque des revendications 1 à 9, **caractérisé en ce que** l'on broie les peaux du mélange de base et l'on introduit les peaux du mélange de base broyées en tant que constituant de mélange du mélange final dans la chambre de mélange préchauffée.

11. Mélange maître activé, susceptible d'être produit à l'aide d'un procédé selon l'une quelconque des revendications 1 à 10.
